(19) **Europäisches Patentamt / European Patent Office / Office européen des brevets**

(11) **EP 4 589 710 A1**

(12) **EUROPEAN PATENT APPLICATION**
published in accordance with Art. 153(4) EPC

(43) Date of publication:
**23.07.2025 Bulletin 2025/30**

(21) Application number: **23865726.6**

(22) Date of filing: **03.08.2023**

(51) International Patent Classification (IPC):
**H01M 10/0562** (2010.01)    **C01B 25/14** (2006.01)

(52) Cooperative Patent Classification (CPC):
**C01B 25/14; H01M 10/0562;** Y02E 60/10

(86) International application number:
**PCT/KR2023/011383**

(87) International publication number:
**WO 2024/058426 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 KR 20220116408**

(71) Applicant: **LOTTE ENERGY MATERIALS CORPORATION**
**Iksan-si, Jeollabuk-do 54586 (KR)**

(72) Inventors:
• **CHUN, Jaehwan**
  **Iksan-si Jeollabuk-do 54586 (KR)**
• **PARK, Joonwoo**
  **Iksan-si Jeollabuk-do 54586 (KR)**
• **LEE, Jeonghyun**
  **Iksan-si Jeollabuk-do 54586 (KR)**
• **RYU, Jong Ho**
  **Iksan-si Jeollabuk-do 54586 (KR)**

(74) Representative: **Mammel und Maser**
**Patentanwälte**
**PartG mbB**
**Tilsiter Straße 3**
**71065 Sindelfingen (DE)**

(54) **MANUFACTURING METHODS OF SULFIDE-BASED SOLID ELECTROLYTE**

(57)    Disclosed is a manufacturing method of a sulfide-based solid electrolyte with a desired particle size by wet grinding. The present disclosure provides a manufacturing method of a sulfide-based solid electrolyte, the method comprising: a step of preparing a sulfide-based solid electrolyte material; and a micronization step of wet grinding the sulfide-based solid electrolyte material, wherein an organic solvent is used as a dispersion medium used in the wet grinding, and a ketone solvent is used as a dispersion stabilizer.

【Fig. 1】

**Description**

[Technical Field]

The present disclosure relates to a manufacturing method of a sulfide-based solid electrolyte and, more specifically, to a manufacturing method of a sulfide-based solid electrolyte to control the particle size by micronizing a crude grain material through wet milling.

[Background Art]

All-solid-state batteries are batteries in which an electrolyte, one of the battery components, is replaced with a solid instead of a conventional liquid. In these batteries, electrolytes and separators required for conventional lithium ion batteries are eliminated, and solid electrolytes are used. Therefore, all-solid-state batteries, compared with conventional batteries using liquid electrolytes, eliminate the risk of explosion or fire, implement simplified manufacturing processes, and offer the potential for high energy density, thus drawing attention as next-generation secondary batteries.

Sulfide-based solid electrolytes, among inorganic solid electrolytes, are attracting attention as solid-state electrolytes (SSEs) for all-solid-state batteries. However, most sulfide-based solid electrolytes are obtained by mixing raw materials, such as $Li_2S$, $P_2S_5$, and LiCl, subjecting the mixture to a long-term high-energy milling process and then a firing process to increase the crystallinity to improve ionic conductivity, and such a firing process results in an increase in particle size of the solid electrolytes. Therefore, the synthesized crude grain materials need to be appropriately micronized depending on the cell site where the solid electrolytes are applied. However, sulfide-based solid electrolytes are soft materials and thus are difficult to micronize. Moreover, solid electrolytes, when micronized by mechanical milling, may be attached or re-agglomerated onto a milling medium, causing a reduction in the recovery rate of solid electrolytes. In particular, the introduction of wet milling in a micronization process may cause residual impurities, such as a solvent used as a dispersion medium, resulting in a reduction in the ionic conductivity of solid electrolytes.

[Disclosure]

[Technical Problem]

The present disclosure has been made to solve the above-mentioned problems of the conventional art, and an aspect of the present disclosure is to provide a manufacturing method of a sulfide-based solid electrolyte with a desired particle size through wet milling.

Another aspect of the present disclosure is to provide a manufacturing method of a sulfide-based solid electrolyte, whereby the solid electrolyte is prevented from attachment or re-agglomeration onto a dispersion medium and is easily crushed during wet milling, thereby achieving an increase in the recovery rate of the solid electrolyte.

Still another aspect of the present disclosure is to provide a manufacturing method of a sulfide-based solid electrolyte by applying a wet milling process to suppress the reduction of ionic conductivity.

[Technical Solution]

In accordance with an aspect of the present disclosure, a method for manufacturing a sulfide-based solid electrolyte is provided, the method including:
preparing a sulfide-based solid electrolyte material, which is a compound containing Li, A (A is at least one of P, Si, Ge, Al, B, and Sn), and S; and micronizing the sulfide-based solid electrolyte material through wet milling, wherein an organic solvent is used as a dispersion medium used in the wet milling, and a ketone-based solvent is used as a dispersion stabilizer.

The dispersion stabilizer may be contained in a content of 0.01 to 10 parts by volume relative to 100 parts by volume of the dispersion medium.

The dispersion stabilizer may be contained in a content of 0.1 to 2 parts by volume relative to 100 parts by volume of the dispersion medium.

The ketone-based solvent may have two hydrocarbon groups or hydrocarbon derivatives linked to a carbonyl group (C=O), and at least one of the two hydrocarbon groups or hydrocarbon derivatives preferably has five or less carbon atoms. Particularly, the ketone-based solvent may include at least one of methyl isobutyl ketone, acetone, butyl methyl ketone, diethyl ketone, diisobutyl ketone, methyl ethyl ketone, methyl pentyl ketone, and methyl propyl ketone.

The organic solvent may include at least one of a hydrocarbon-based non-polar solvent and an aromatic compound.

The method may further include, after the micronizing, removing the dispersion medium and the dispersion stabilizer to recover a powder, wherein the weight of the recovered powder may be 80% or more of the weight of the fed powder.

[Advantageous Effects]

According to the present disclosure, a sulfide-based solid electrolyte with a desired particle size can be provided through wet milling. Furthermore, the solid electrolyte can be prevented from attachment or re-agglomeration onto a dispersion medium and is easily crushed during wet milling, thereby achieving an increase in the recovery rate of the solid electrolyte. Furthermore, a sulfide-based solid electrolyte can be produced by applying a wet milling process to suppress the reduction of ionic conductivity.

[Description of Drawings]

FIG. 1 is a graph showing the particle size analysis results of Examples 1 to 4 and Comparative Examples 1 to 4 according to the amount of balls used in a milling process.
FIG. 2 is a graph showing the recovery rate results of Examples 1 to 4 and Comparative Examples 1 to 4 according to the amount of balls used in a milling process.
FIG. 3 is a graph showing the particle size analysis results of powder samples of Examples 5 to 11 and Comparative Example 5.
FIG. 4 is a graph plotting the recovery rate measurement results of Examples 5 to 11 and Comparative Example 5.
FIG. 5 is a graph comparing the ionic conductive measurements and particle sizes of Examples 5 to 11 and Comparative Example 5.
FIG. 6 is a graph showing the calculation results of the ionic conductivity/volume ratio of the examples of the present disclosure.
FIG. 7 is a graph showing the XRD analysis results of a powder sample in one example of the present disclosure.
FIG. 8 is a graph showing the particle size distribution analysis results of powder samples obtained in additional examples of the present disclosure.
FIG. 9 is a graph showing the recovery rate measurement results of powder samples obtained in additional examples of the present disclosure.
FIG. 10 is a graph showing the comparison of the ionic conductivity measurement results and particle sizes of Example 7, Examples 12 to 18, and Comparative Example 5.
FIG. 11 is a graph showing the calculation of the ionic conductivity/volume ratios of powder samples of additional examples of the present disclosure.
FIG. 12 is a graph showing the electronic conductivity analysis results of one example and a comparative example of the present disclosure.

[Best Mode for Invention]

The features described in exemplary embodiments and drawings shown herein are for merely illustrating one of the most preferable exemplary embodiments but are not intended to represent the technical idea of the present disclosure, and thus the present disclosure may cover various equivalents and modifications which can substitute for the exemplary embodiments at the time of filing the present application. Hereinafter, exemplary embodiments of the present disclosure will be described in more detail with reference to the accompanying drawings.
In the manufacturing method of a solid electrolyte of the present disclosure, the sulfide-based solid electrolyte material may be a compound containing Li, A, and S, wherein A may include at least one of P, Si, Ge, Al, B, and Sn. In the sulfide-based solid electrolyte compound, S may be partially substituted with a halogen element (F, Cl, Br, or I), oxygen (O), nitrogen (N), or the like.
The manufacturing method of a solid electrolyte according to the present disclosure may be applied to a sulfide-based solid electrolyte having a crystalline structure of, for example, $Li_2S$-$P_2S$ glass, Li-P-S glass ceramic, argyrodite, thio-LISICON, or LGPS.
The manufacturing method of a solid electrolyte according to the present disclosure may be applied particularly to an argyrodite-type solid electrolyte having a compositional formula of $Li_{7-x}PS_{6-x}X_x$ (where X is at least one element selected from the group consisting of F, Cl, Br, I, O, and N, and $0 \leq x \leq 2$).
Hereinafter, the manufacturing method of the present disclosure is described according to each step.

A. Synthesis of solid electrolyte

A sulfide-based solid electrolyte with a desired composition may be synthesized using a known method. For example, solid-phase synthesis of milling and mixing a lithium source, a sulfur source, a phosphorus source, and a halogen source may be used, or liquid-phase synthesis of dissolving each source in a solvent and then conducting synthesis may be used.

After the solid electrolyte with a desired composition is synthesized, a firing process may be conducted to increase crystallinity to improve ionic conductivity. For example, for the synthesis of $Li_6PS_5Cl$ compound, the firing process may be conducted in an inert atmosphere, such as Ar or $N_2$, at a temperature of 400 to 600°C for 1 to 12 hours.

The above-described synthesis methods are illustrative, and it is obvious that a different powder synthesized by any method may be used in the solid electrolyte synthesis process of the present disclosure.

B. Particle size control of particle size of solid electrolyte

In order to control the particle size of the solid electrolyte, a wet milling process is used. The wet milling process may be conducted by a ball mill, a bead mill, a planetary ball mill, or the like, using a dispersion medium.

In the wet milling process of the present disclosure, an organic solvent may be used as the dispersion medium, and preferably, a hydrocarbon-based nonpolar solvent or an aromatic compound may be used. Examples of the hydrocarbon-based nonpolar solvent may include various solvents, such as hexane, heptane, octane, nonane, decane, undecane, dodecane, and a mixture thereof, and examples of the aromatic compound may include various solvents, such as benzene, ethylbenzene, durene, diethyl benzene, styrene, xylene, and toluene.

In the wet milling process of the present disclosure, a dispersion stabilizer is used to improve milling efficiency. A ketone-based solvent is preferably used as the dispersion stabilizer. In the present disclosure, the ketone-based compound as a dispersion stabilizer has two hydrocarbon groups or hydrocarbon derivatives linked to a carbonyl group (C=O), and for easy removal of the dispersion stabilizer, at least one of two hydrocarbon groups or hydrocarbon derivatives has ten or less, particularly, five or less carbon atoms. For example, one or a mixture selected from the group consisting of methyl isobutyl ketone, acetone, butyl methyl ketone, diethyl ketone, diisobutyl ketone, methyl ethyl ketone, methyl pentyl ketone, methyl propyl ketone, dipropyl ketone, ethyl pentyl ketone, ethyl butyl ketone, ethyl propyl ketone, and ethyl isopropyl ketone may be used.

In the present disclosure, a ketone used as a dispersion stabilizer enables the production of a powder with a fine particle size by suppressing the agglomeration of the solid electrolyte during milling. In addition, a ketone as a dispersion stabilizer increases the milling yield by suppressing the attachment of a solid electrolyte powder onto a dispersion medium, such as a ball. In the micronization process of the present disclosure, the dispersion stabilizer can increase the milling efficiency, thereby suppressing a reduction in the ionic conductivity caused by the micronization process.

In the present disclosure, the concentration of the dispersion stabilizer may be 0.01 to 10 parts by volume, preferably 0.1 to 2 parts by volume relative to 100 parts by volume of the dispersion medium. The powder micronized within the above concentration range exhibits a more improved average particle size. However, the dispersion stabilizer exceeding 10 parts by volume exhibits a similar particle size distribution compared with when no dispersion stabilizer is used. Therefore, the dispersion stabilizer is contained in a content of preferably 10 parts by volume with regard to the particle size distribution. In addition, the dispersion stabilizer is contained in a content of 0.01 to 10 parts by volume, particularly, 0.1 to 2 parts by volume with regard to the ionic conductivity.

In general, the micronization of solid electrolytes results in a reduction in the ionic conductivity. The reasons why the ion conductivity is reduced as above are that i) as the particle size decreases, the interface between particles increases, resulting in an increase in overall resistance, and ii) the crystallinity of the solid electrolytes decreases through the milling process. Thus, it is difficult to directly compare the ionic conductivities of solid electrolytes with different particle sizes. In the present disclosure, in order to compare the ion conductivities of solid electrolytes with different particle sizes, the ratio (R) of ionic conductivity to particle volume is defined as follows.

$$R = (ionic\ conductivity)/(particle\ volume)$$

The particle volume is calculated by the following equation under the assumption that particles subjected to particle size measurement are spherical.

$$(Particle\ volume) = 4/3\ \pi r^3,\ r = (particle\ size,\ D50)/2$$

Therefore, the ratio of ionic conductivity/particle volume is calculated and compared under assumption that particles are of the same size.

In the present disclosure, a specific micronization process using the above-described dispersion medium and dispersion stabilizer may be appropriately designed. For example, the micronization process may include a coarse milling process and a fine milling process. Ball mill or planetary mill can improve the milling efficiency by using balls with a large diameter in the coarse milling process and using balls with a small diameter in the fine milling process.

After the milling process, the dispersion medium and dispersion stabilizer may be removed by various methods, such as filtration, precipitation, and vacuum drying.

The particle size of the sulfide-based solid electrolyte powder obtained through the processes described above in the present disclosure may have the following characteristics.

$$2.5 < D_{50}(\mu m) < 3.5,$$

$$0.9 < SPAN < 1.35$$

(where, particle size distribution span (SPAN) = $(D_{90} - D_{10})/D_{50}$)

In the present disclosure, the recovery rate, referring to the ratio of the weight of the recovered powder to the weight of the fed powder, may be 80% or more, 85% or more, or 90% or more.

Meanwhile, the ionic conductivity of the sulfide-based solid electrolyte powder of the present disclosure is preferably 1.0 mS/cm or more, 1.1 mS/cm or more, or 1.2 mS/cm or more. In the present disclosure, a sulfide-based solid electrolyte powder with an ionic conductivity of up to 1.4 mS/cm can be produced.

In the present disclosure, the ratio (R) of ionic conductivity to particle volume may be 0.06 or higher, 0.07 or higher, 0.08 or higher, 0.09 or higher, 0.1 or higher. It should be noted that the ratio of ionic conductivity to particle volume in the present disclosure is a relative value that may vary depending on the type, particle size, and the like of solid electrolyte.

[Mode for Invention]

Hereinafter, the present disclosure is described through exemplary embodiments.

<Synthetic Example of $Li_6PS_5Cl$>

$Li_2S$, $P_2S_5$, and LiCl were weighed as starting materials, and milled and mixed in a planetary ball mill. Specifically, the starting materials were subjected to dry milling using $\Phi$15 mm balls at a rotation speed of 200 to 350 rpm for 2 to 12 hours in a PM400 planetary mill from Retsch.

Then, the milled starting materials were fired by heat treatment at a temperature of 550°C for 6 hours in an inert atmosphere, thereby synthesizing $Li_6PS_5Cl$.

<Example 1>

After 100 g of $Li_6PS_5Cl$, synthesized in the experimental example, was placed, together with 400 g of $\Phi$10 mm balls, 250 mL of decane, and 0.25 mL of methyl isobutyl ketone weighed, into a 500-mL jar, coarse milling was first conducted using a planetary ball mill.

Then, the coarsely milled $Li_6PS_5Cl$ powder was recovered, and subjected to micro-milling, thereby finally controlling the particle size. After 100 g of $\Phi$3 mm balls, 10 g of $Li_6PS_5Cl$ that had been coarsely milled, 250 ml of decane, and 12.5 ml of methyl isobutyl ketone were weighed and placed into a 500 ml jar, planetary ball mill was conducted.

After the completion of the milling, the balls were separated out, and filtration was conducted, and then solids were collected and vacuum dried at a temperature of 80 to 120°C for 3 to 12 hours to prepare a powder sample. The weight of $Li_6PS_5Cl$ before milling was designated as the feed amount, and the content of the powder remaining after vacuum drying was designated as the recovery amount, and the recovery rate was measured according to the following equation.

<Equation 1>

(Recovery rate) = (Recovery amount)/(Feed amount) *100

<Examples 2 to 4>

Solid electrolyte powders of Examples 2 to 4 were prepared under the same conditions as in Example 1 except that the amounts of balls used as a dispersion medium in the micro-milling step were 200 g, 300 g, and 400 g, respectively.

<Comparative Examples 1 to 4>

Solid electrolyte powders of Comparative Examples 1 to 4 were prepared under the same conditions as in Examples 1 to 4 except that no dispersion stabilizer was added in the micro-milling step. That is, in Comparative Examples 1 to 4, the amounts of balls used as a dispersion medium in the micro-milling step were 100 g, 200 g, 300 g, and 400 g, respectively, and 250 ml of decane was used as a dispersion medium, but no dispersion stabilizer was added.

<Example 5>

After 100 g of Φ3 mm balls, 10 g of $Li_6PS_5Cl$ that had been coarsely milled, 150 ml of decane, and 0.15 ml of methyl isobutyl ketone were weighed and placed into a 500 ml jar, planetary ball mill was conducted.
After the completion of the milling, the balls were separated out, and filtration was conducted, and then solids were collected and vacuum dried at a temperature of 80 to 120°C for 3 to 12 hours to prepare a powder sample.

< Examples 6 to 11>

Solid electrolyte powder samples were prepared by the same method as in Example 5 except that the content of the dispersion stabilizer was varied.
That is, the $Li_6PS_5Cl$ powders obtained by varying the concentration of the dispersion stabilizer to 0.5 parts by volume, 1.0 parts by volume, 2.0 parts by volume, 5.0 parts by volume, 7.5 parts by volume, and 10 parts by volume relative to 100 parts by volume of the dispersion medium were milled to prepare powder samples Examples 6 to 11, respectively.

<Comparative Example 5>

A powder sample of Comparative Example 5 was prepared by the same method as in Example 5 except that no dispersion stabilizer was used.
The concentrations of the dispersion stabilizer, which indicate the part by volume of the dispersion stabilizer relative to 100 parts by volume of the dispersion medium, were summarized for Examples 5 to 11 and Comparative Example 5 in the following table.

[TABLE 1]

| Classification | Dispersion stabilizer concentration (parts by volume) |
|---|---|
| Example 5 | 0.1 |
| Example 6 | 0.5 |
| Example 7 | 1.0 |
| Example 8 | 2.0 |
| Example 9 | 5.0 |
| Example 10 | 7.5 |
| Example 11 | 10.0 |
| Comparative Example 5 | 0.0 |

<Examples 12 to 18> Powder samples were prepared under the same conditions as in Example 7 while the concentration of the dispersion stabilizer was fixed to 1 part by volume and the type of dispersion stabilizer was varied. The dispersion stabilizers used in the respective examples are shown in Table 2 below.

[TABLE 2]

| Classification | Dispersion stabilizer |
|---|---|
| Example 12 | Acetone |
| Example 13 | Butyl methyl ketone |
| Example 14 | Diethyl ketone |
| Example 15 | Diisobutyl ketone |

(continued)

| Classification | Dispersion stabilizer |
| --- | --- |
| Example 16 | Methyl ethyl ketone |
| Example 17 | Methyl pentyl ketone |
| Example 18 | Methyl propyl ketone |

<Powder sample evaluation>A. particle size distribution

A powder sample was dispersed in toluene, introduced into the equipment at a flow rate of 55%, and subjected to 40 W ultrasonic waves for 120 seconds, repeated five times. Then, the particle size distribution was measured using Microtrac S3500.

The particle size distribution span was calculated by the following equation.

$$\text{Particle size distribution span (SPAN)} = (D_{90} - D_{10})/D_{50}$$

B. EIS

A cell was prepared by filling a 10 mm diameter mold with 100 mg of a powder sample, pressing the sample at a pressure of 310 MPa, and disposing indium (In) electrodes. The impedance was measured using a potentiostat/galvanostat (VSP-300). Particularly, the frequency range was 0.1 Hz to 1 MHz, and the amplitude voltage was 100 mV.

The resistance value was obtained from the arc of the Nyquist plot for the impedance measurement results, and the ionic conductivity was calculated considering the area and thickness of the sample.

C. Ionic conductivity-to-particle volume ratio (R)

The $D_{50}$ value in micrometers ($\mu$m) from the particle size distribution measurement was used as the representative value of the powder sample, and under the assumption that a spherical particle has this value as the diameter, the volume of the spherical particle was calculated. Then, the ratio R (dimensionless) was defined as the ionic conductivity value in mS/cm of the measured powder sample divided by the volume of the spherical particle in $\mu m^3$.

D. Electronic conductivity

A cell was prepared by filling a 10 mm diameter mold with 100 mg of a powder sample, pressing the sample at a pressure of 310 MPa, and disposing SUS electrodes. A voltage of 1 V was applied using a potentiostat/galvanostat (VSP-300), and the current was measured 1 hour later. The electronic conductivity was calculated considering the area and thickness of the sample for the measured current.

E. XRD

The Malvernpanalytical Aeris system (Cu k$\alpha$, $\lambda$=1.5406Å) was used for XRD spectrum measurement. Particularly, the voltage was 40 kV and the current was 15 mA for measurement.

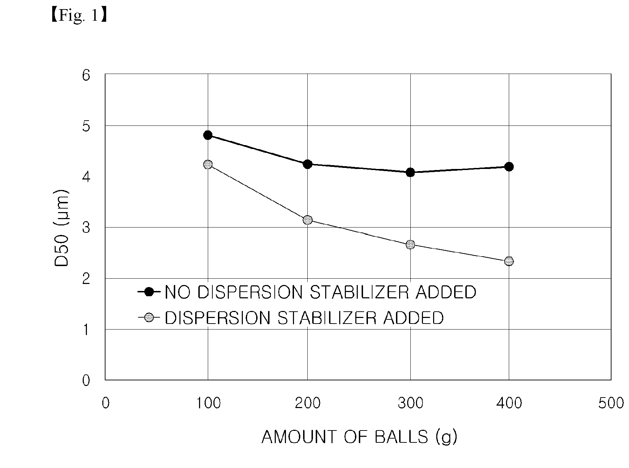

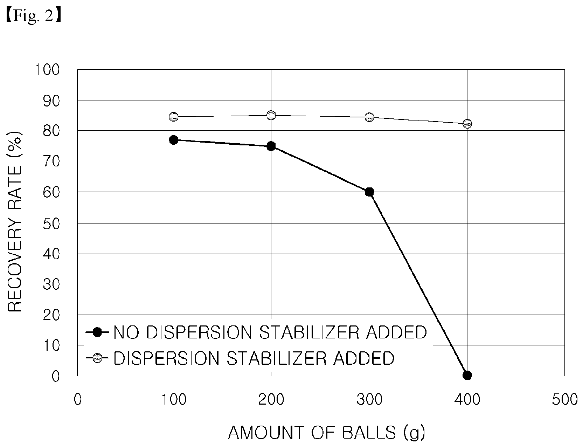

FIGS. 1 and 2 are graphs showing the size of milled particles and the powder recovery rate according to the amount of balls used as a dispersion medium.

Referring to FIG. 1, with the use of a dispersion stabilizer, the particle size decreased according to the amount of balls introduced, thereby facilitating particle size control. However, without the use of a dispersion stabilizer, the particle size did not decrease beyond a predetermined level even though the amount of balls increased, resulting in difficulty in particle size control.

Referring to FIG. 2, with the use of a dispersion stabilizer, the recovery rate was still high despite an increase in the amount of balls introduced, but without the use of a dispersion stabilizer, the amount of powder stuck and re-agglomerated onto the balls increased, resulting in a rapid reduction in the recovery rate.

The particle sizes and recovery rates of Examples 1 to 4 and Comparative Examples 1 to 4 are shown in Table 3 below.

[TABLE 3]

| Classification | Amount of balls (g) | D50(mm) | Recovery rate (%) |
|---|---|---|---|
| Example 1 | 100 | 4.24 | 84.7 |
| Example 2 | 200 | 3.15 | 85.4 |
| Example 3 | 300 | 2.66 | 84.6 |
| Example 4 | 400 | 2.34 | 82.3 |
| Comparative Example 1 | 100 | 4.82 | 77.0 |
| Comparative Example 2 | 200 | 4.25 | 75.0 |
| Comparative Example 3 | 300 | 4.08 | 60.0 |
| Comparative Example 4 | 400 | 4.20 | 0.2 |

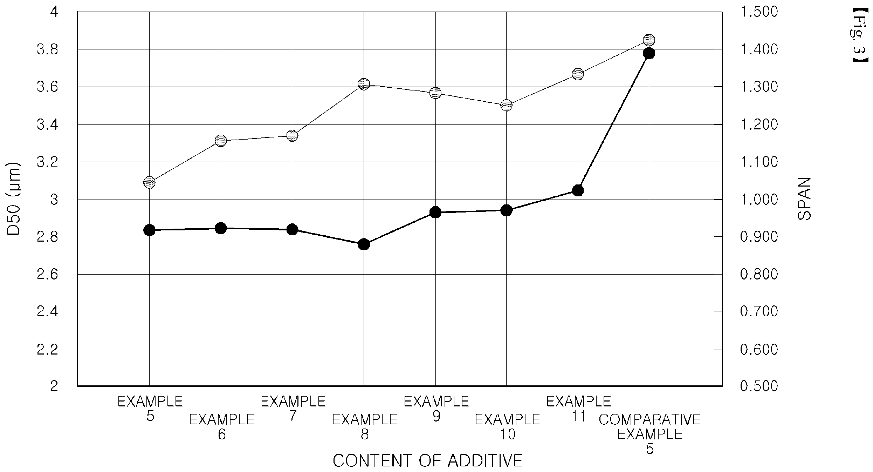

FIG. 3 is a graph showing the particle size analysis results of powder samples of Examples 5 to 11 and Comparative Example 5. Referring to FIG. 3, Examples 5 to 11 using methyl isobutyl ketone as a dispersion stabilizer showed a significant reduction in the average particle size (D50) compared with Comparative Example 5 not using a dispersion stabilizer. The particle size analysis results of the respective examples and comparative examples are shown in Table 4 below.

[TABLE 4]

| Classification | Content (%) | D10 ($\mu$m) | D50 ($\mu$m) | D90 ($\mu$m) | SPAN |
|---|---|---|---|---|---|
| Example 5 | 0.1 | 1.76 | 2.84 | 4.73 | 1.05 |
| Example 6 | 0.5 | 1.69 | 2.85 | 4.98 | 1.16 |
| Example 7 | 1.0 | 1.68 | 2.85 | 5.01 | 1.17 |
| Example 8 | 2.0 | 1.57 | 2.76 | 5.18 | 1.31 |
| Example 9 | 5.0 | 1.71 | 2.93 | 5.47 | 1.28 |
| Example 10 | 7.5 | 1.73 | 2.94 | 5.41 | 1.25 |
| Example 11 | 10.0 | 1.75 | 3.05 | 5.82 | 1.33 |
| Comparative Example 5 | 0.0 | 1.90 | 3.78 | 7.29 | 1.43 |

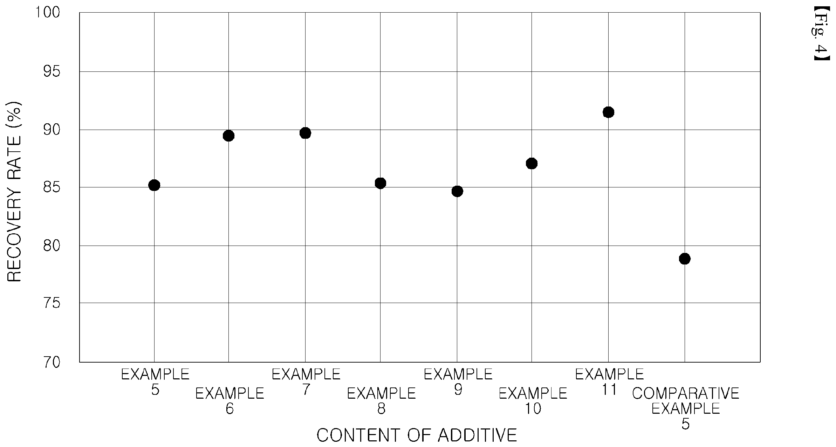

FIG. 4 is a graph showing the recovery rate measurement results. Referring to FIG. 4, the examples showed higher recovery rates compared with Comparative Example 5. Table 5 shows the recovery rate measurement results according to the content of the dispersion stabilizer.

[TABLE 5]

| Classification | Content (%) | Recovery rate (%) |
|---|---|---|
| Example 5 | 0.1 | 85.2 |
| Example 6 | 0.5 | 89.5 |
| Example 7 | 1.0 | 89.7 |
| Example 8 | 2.0 | 85.4 |
| Example 9 | 5.0 | 84.7 |
| Example 10 | 7.5 | 87.1 |
| Example 11 | 10.0 | 91.5 |
| Comparative Example 5 | 0.0 | 78.9 |

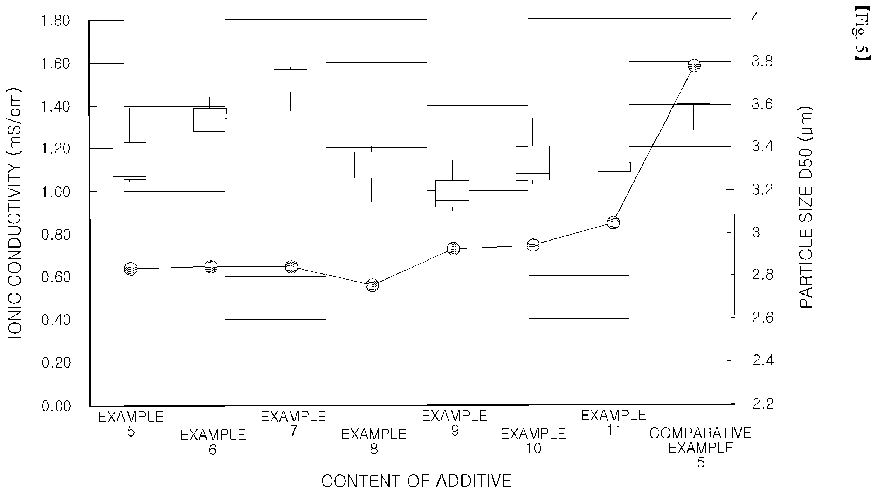

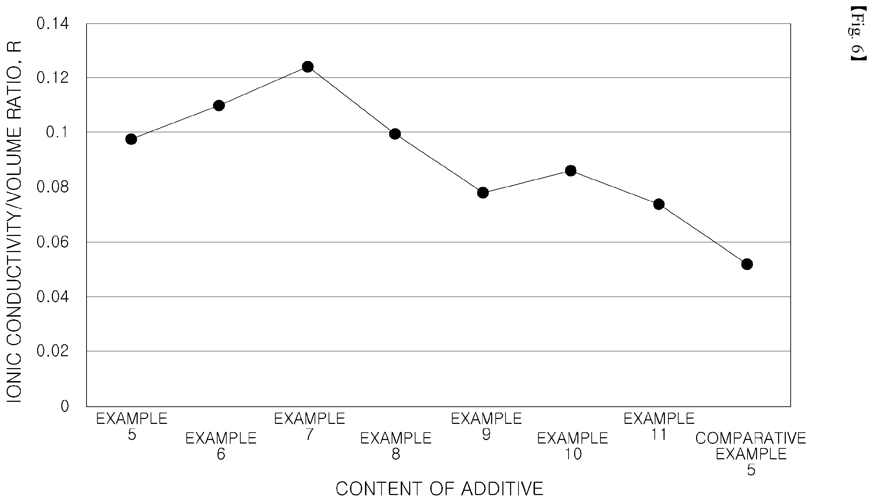

FIG. 5 is a graph showing the ionic conductivity measurement results. Referring to FIG. 5, the ionic conductivities of the examples showed lower values than that of the comparative example. The reason is considered to be attributed to the fact that the non-use of a dispersion stabilizer in the comparative example prevented the particle size from being controlled to a desired level, and thus the powder sample of the comparative example had a smaller particle size than the powder samples of the examples, causing an increase in the interface between particles during molding. Therefore, a standardized criterion was required to compare the examples and the comparative example at the same level of particle size. In the present disclosure, the ionic conductivity-to-particle volume ratio (R) was introduced as the criterion. FIG. 6 is a graph showing the ionic conductivity-to-particle volume ratios of the examples and the comparative example.

Referring to FIG. 6, the ionic conductivity-to-particle volume ratios of the examples showed higher values than that of the comparative example. These results indicate that the ionic conductivities of the powder samples of the examples would have higher values than that of the powder sample of the comparative example, which was assumed to have the same size as the examples.

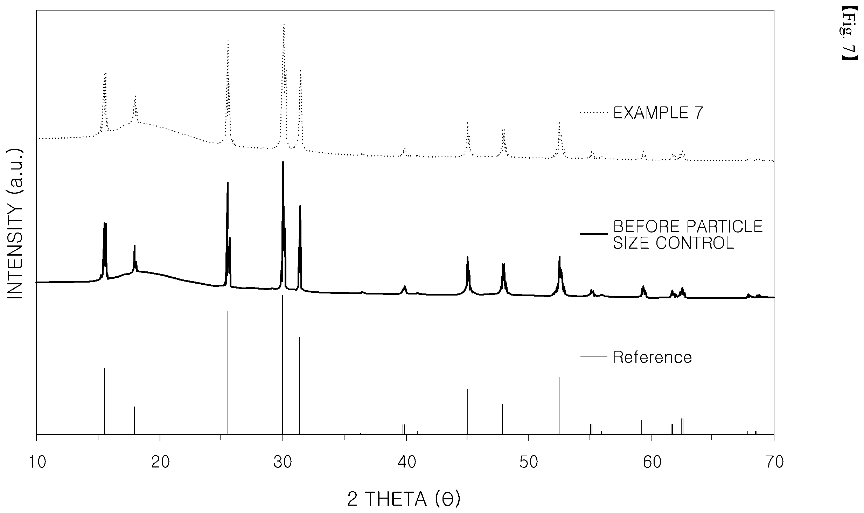

FIG. 7 is a graph showing XRD analysis results of the powder sample, which was synthesized in the experimental example, before particle size control, and the powder sample of Example 7 after wet milling.

Referring to FIG. 7, crystalline $Li_6PS_5Cl$ was synthesized when compared to the reference peaks of $Li_6PS_5Cl$, and the $Li_6PS_5Cl$ phase was maintained even after milling.

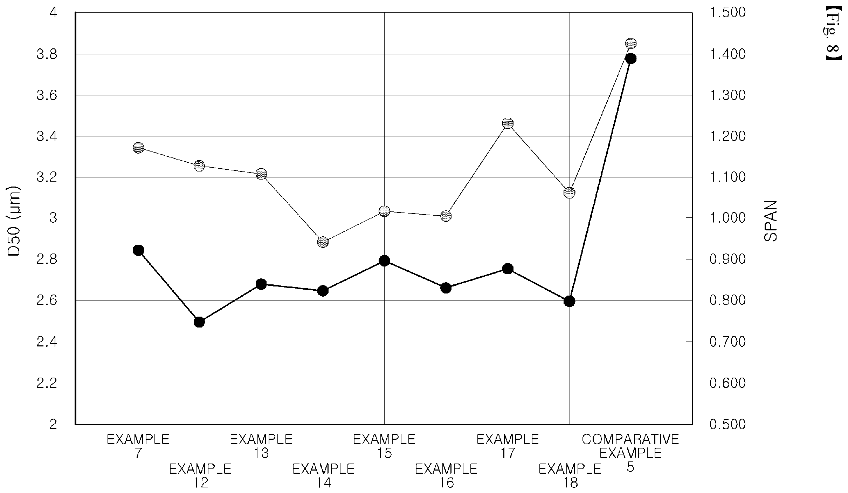

FIG. 8 is a graph showing the particle size analysis results of powder samples of Examples 12 to 18. For comparison, particle size data for Example 7 and Comparative Example 5 were plotted together.

Referring to FIG. 8, Examples 12 to 18 using ketone-based dispersion stabilizers showed significant reductions in the average particle size (D50) compared with Comparative Example 5 not using a dispersion stabilizer.

The particle size analysis results of the respective examples and the comparative example are shown in Table 6 below.

[TABLE 6]

| Classification | Dispersion stabilizer type | D10 ($\mu$m) | D50 ($\mu$m) | D90 ($\mu$m) | SPAN |
|---|---|---|---|---|---|
| Example 7 | Methyl isobutyl ketone | 1.68 | 2.85 | 5.01 | 1.17 |
| Example 12 | Acetone | 1.51 | 2.50 | 4.33 | 1.13 |
| Example 13 | Butyl methyl ketone | 1.65 | 2.69 | 4.63 | 1.11 |
| Example 14 | Diethyl ketone | 1.68 | 2.65 | 4.18 | 0.94 |
| Example 15 | Diisobutyl Ketone | 1.74 | 2.79 | 4.59 | 1.02 |
| Example 16 | Methyl ethyl ketone | 1.67 | 2.67 | 4.35 | 1.01 |
| Example 17 | Methyl pentyl ketone | 1.64 | 2.76 | 5.03 | 1.23 |
| Example 18 | Methyl propyl ketone | 1.60 | 2.60 | 4.36 | 1.06 |
| Comparative Example 5 | - | 1.90 | 3.78 | 7.29 | 1.43 |

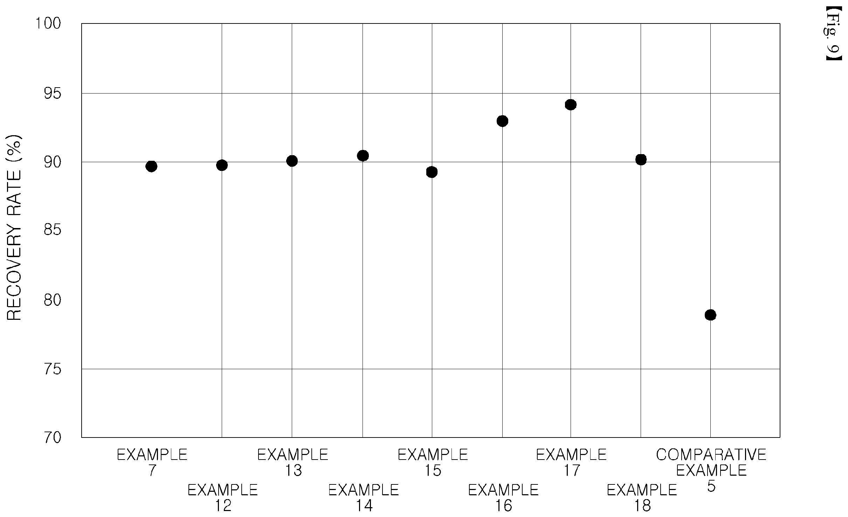

FIG. 9 is a graph showing the measurement results of recovery rates of the powder samples of Examples 12 to 18. For comparison, the recovery rates for Example 7 and Comparative Example 5 were plotted together. Referring to FIG. 9, the examples showed higher recovery rates compared with Comparative Example 5. Table 7 shows the recovery rate measurement results according to the type of dispersion stabilizer.

[TABLE 7]

| Classification | Dispersion stabilizer type | Recovery rate (%) |
|---|---|---|
| Example 7 | Methyl isobutyl ketone | 89.7 |
| Example 12 | Acetone | 89.8 |
| Example 13 | Butyl methyl ketone | 90.1 |
| Example 14 | Diethyl ketone | 90.4 |
| Example 15 | Diisobutyl ketone | 89.3 |
| Example 16 | Methyl ethyl ketone | 92.9 |
| Example 17 | Methyl pentyl ketone | 94.1 |
| Example 18 | Methyl propyl ketone | 90.2 |
| Comparative Example 5 | - | 78.9 |

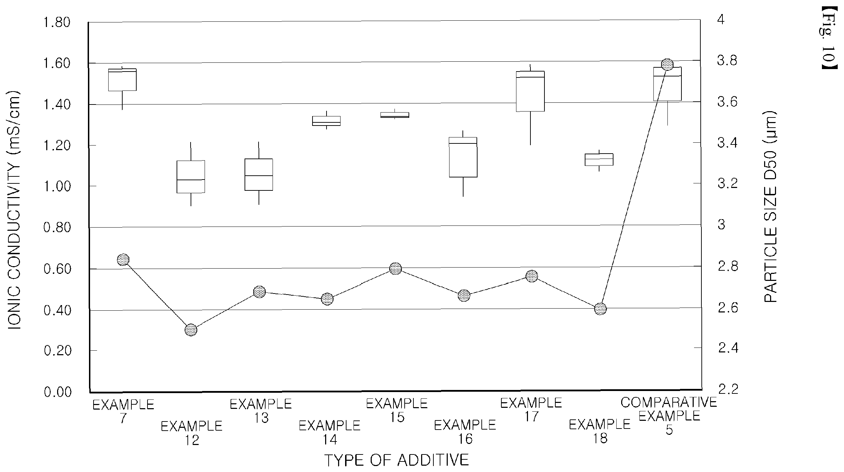

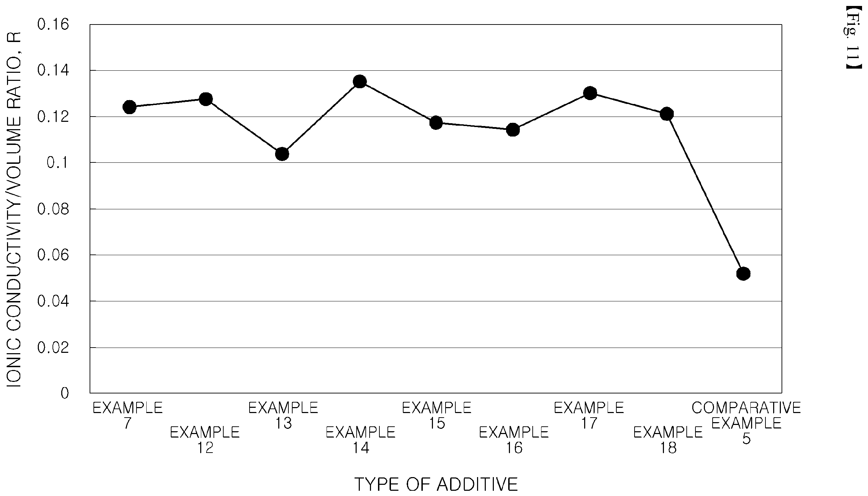

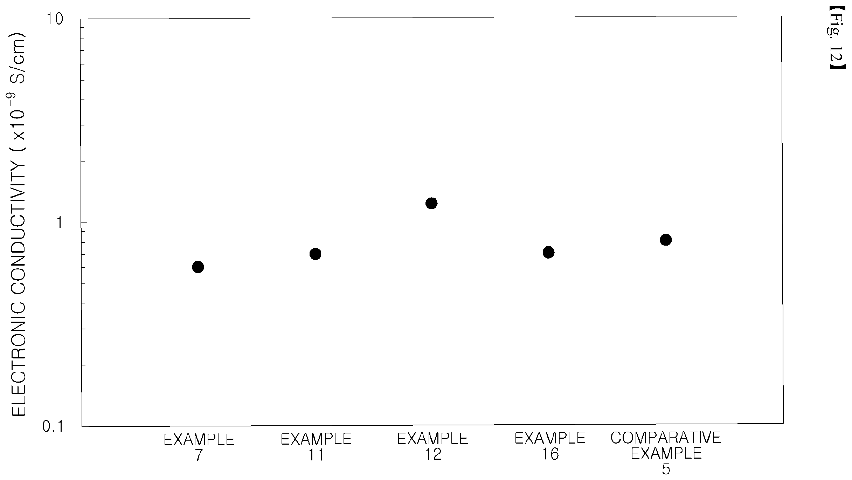

FIGS. 10 and 11 are graphs showing the measurement results of ionic conductivities and the ionic conductivity-to-particle volume ratios of the powder samples of Examples 12 to 18. For comparison, the measurement results for Example 7 and Comparative Example 5 were plotted together. Referring to FIG. 11, the ionic conductivity-to-particle volume ratios of the examples showed higher values than that of the comparative example. FIG. 12 is a graph showing the measurement results of electronic conductivities of the examples and comparative example.

Referring to FIG. 12, the electronic conductivities of the examples and comparative example are not considered to have no significant difference. Therefore, there was no change in the electronic conductivity according to the content and type of dispersion stabilizer, indicating that very little dispersion stabilizer remained.

Although preferable embodiments of the present disclosure have been described in detail, it would be understood that various modifications of the described embodiment are possible by those skilled in the art to which the present disclosure pertains without departing from the scope of the present disclosure. Therefore, the scope of right of the present disclosure shall not be defined by the described embodiment, but shall be defined by the claims to be described later and their equivalents.

[Industrial Applicability]

The present disclosure is applicable to solid electrolytes for lithium secondary batteries.

## Claims

1. A method for manufacturing a sulfide-based solid electrolyte, the method comprising:

   preparing a sulfide-based solid electrolyte material, which is a compound containing Li, A (A is at least one of P, Si, Ge, Al, B, and Sn), and S; and
   micronizing the sulfide-based solid electrolyte material through wet milling,
   wherein an organic solvent is used as a dispersion medium used in the wet milling, and a ketone-based solvent is used as a dispersion stabilizer.

2. The method of claim 1, wherein the dispersion stabilizer is contained in a content of 0.01 to 10 parts by volume relative to 100 parts by volume of the dispersion medium.

3. The method of claim 2, wherein the dispersion stabilizer is contained in a content of 0.1 to 2 parts by volume relative to 100 parts by volume of the dispersion medium.

4. The method of claim 1, wherein the ketone-based solvent has two hydrocarbon groups or hydrocarbon derivatives linked to a carbonyl group (C=O), and at least one of the two hydrocarbon groups or hydrocarbon derivatives has five or less carbon atoms.

5. The method of claim 4, wherein the ketone-based solvent includes at least one of methyl isobutyl ketone, acetone, butyl methyl ketone, diethyl ketone, diisobutyl ketone, methyl ethyl ketone, methyl pentyl ketone, and methyl propyl ketone.

6. The method of claim 1, wherein the organic solvent includes at least one of a hydrocarbon-based non-polar solvent and an aromatic compound.

7. The method of claim 1, further comprising, after the micronizing, removing the dispersion medium and the dispersion stabilizer to recover a powder, wherein the weight of the recovered powder is 80% or more of the weight of the fed powder.

【Fig. 1】

【Fig. 2】

【Fig. 3】

【Fig. 4】

【Fig. 5】

EP 4 589 710 A1

15

【Fig. 6】

【Fig. 7】

【Fig. 8】

【Fig. 9】

【Fig. 10】

【Fig. 11】

【Fig. 12】

## INTERNATIONAL SEARCH REPORT

| International application No. |
| --- |
| **PCT/KR2023/011383** |

| A. | CLASSIFICATION OF SUBJECT MATTER |
| --- | --- |

**H01M 10/0562**(2010.01)i; **C01B 25/14**(2006.01)i

According to International Patent Classification (IPC) or to both national classification and IPC

| B. | FIELDS SEARCHED |
| --- | --- |

Minimum documentation searched (classification system followed by classification symbols)

H01M 10/0562(2010.01); C01B 25/14(2006.01); H01B 1/06(2006.01); H01B 1/10(2006.01); H01B 13/00(2006.01); H01M 10/052(2010.01); H01M 10/40(2006.01); H01M 4/00(2006.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 황화물계 고체전해질(sulfide solid electrolyte), 습식 분쇄(wet grinding), 미립화(atomization), 유기용매(organic solvent), 분산 안정제(dispersion stabilizer), 케톤(ketone)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2017-0001715 A (TOYOTA JIDOSHA KABUSHIKI KAISHA) 04 January 2017 (2017-01-04)<br>See claims 1-2; and paragraphs [0021]-[0022], [0031], [0049]-[0050] and [0059]-[0061]. | 1-7 |
| Y | KR 10-2020-0051012 A (FUJIFILM CORPORATION) 12 May 2020 (2020-05-12)<br>See paragraphs [0007]-[0008], [0046] and [0096]-[0107]. | 1-7 |
| A | JP 2008-004459 A (IDEMITSU KOSAN CO., LTD.) 10 January 2008 (2008-01-10)<br>See claims 1-4. | 1-7 |
| A | JP 2021-082409 A (TOYOTA MOTOR CORP.) 27 May 2021 (2021-05-27)<br>See paragraphs [0027]-[0034]. | 1-7 |
| A | JP 6719038 B1 (IDEMITSU KOSAN CO., LTD.) 08 July 2020 (2020-07-08)<br>See paragraph [0060]. | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 October 2023** | **31 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011383**

| Patent document cited in search report | | | Publication date (day/month/year) | Patent family member(s) | | | Publication date (day/month/year) |
|---|---|---|---|---|---|---|---|
| KR | 10-2017-0001715 | A | 04 January 2017 | CN | 103650062 | A | 19 March 2014 |
| | | | | CN | 103650062 | B | 19 April 2017 |
| | | | | EP | 2732451 | A1 | 21 May 2014 |
| | | | | EP | 2732451 | B1 | 19 November 2014 |
| | | | | JP | 2013-020894 | A | 31 January 2013 |
| | | | | JP | 5445527 | B2 | 19 March 2014 |
| | | | | KR | 10-1780917 | B1 | 21 September 2017 |
| | | | | KR | 10-2014-0031969 | A | 13 March 2014 |
| | | | | US | 2014-0141339 | A1 | 22 May 2014 |
| | | | | US | 9595735 | B2 | 14 March 2017 |
| | | | | WO | 2013-008089 | A1 | 17 January 2013 |
| KR | 10-2020-0051012 | A | 12 May 2020 | CN | 111247673 | A | 05 June 2020 |
| | | | | EP | 3706209 | A1 | 09 September 2020 |
| | | | | EP | 3706209 | A4 | 16 December 2020 |
| | | | | JP | 2020-087750 | A1 | 12 November 2020 |
| | | | | JP | 6876820 | B2 | 26 May 2021 |
| | | | | KR | 10-2364247 | B1 | 16 February 2022 |
| | | | | US | 11658282 | B2 | 23 May 2023 |
| | | | | US | 2020-0227726 | A1 | 16 July 2020 |
| | | | | WO | 2019-087750 | A1 | 09 May 2019 |
| JP | 2008-004459 | A | 10 January 2008 | None | | | |
| JP | 2021-082409 | A | 27 May 2021 | None | | | |
| JP | 6719038 | B1 | 08 July 2020 | CN | 112384993 | A | 19 February 2021 |
| | | | | CN | 112384993 | B | 21 July 2023 |
| | | | | EP | 3886119 | A1 | 29 September 2021 |
| | | | | EP | 3886119 | A4 | 10 August 2022 |
| | | | | JP | 2021-105736 | A1 | 15 February 2021 |
| | | | | KR | 10-2021-0091046 | A | 21 July 2021 |
| | | | | US | 11658337 | B2 | 23 May 2023 |
| | | | | US | 2021-0242496 | A1 | 05 August 2021 |
| | | | | US | 2023-0223594 | A1 | 13 July 2023 |
| | | | | WO | 2020-105736 | A1 | 28 May 2020 |

Form PCT/ISA/210 (patent family annex) (July 2022)